# EUROPÄISCHE PATENTSCHRIFT

(11) **EP 4 293 233 B1**
(45) Veröffentlichungstag und Bekanntmachung des Hinweises auf die Patenterteilung: **03.12.2025**
(21) Anmeldenummer: 23204422.2
(22) Anmeldetag: 18.10.2023
(51) Int. Cl.: F04D 19/04, F04D 29/08, F04D 29/52, F04D 29/64, F16J 15/04

(54) **VAKUUMGERÄT**
VACUUM APPARATUS
APPAREIL À VIDE

(43) Veröffentlichungstag der Anmeldung: 20.12.2023
(73) Patentinhaber: Pfeiffer Vacuum Technology AG, 35614 Asslar (DE)
(72) Erfinder: Lohse, Martin, 35586 Wetzlar (DE); Schweighöfer, Michael, 35641 Schöffengrund (DE); Hofmann, Jan, 35305 Grünberg (DE)
(74) Vertreter: Manitz Finsterwald Patent- und Rechtsanwaltspartnerschaft mbB

(56) Entgegenhaltungen:
- WO-A1-2009/028099
- WO-A1-99/61799
- DE-A1- 102014 012 317
- DE-A1- 4 242 290
- DE-U1- 202013 003 855
- US-A1- 2017 102 009
- US-A1- 2019 195 234
- US-A1- 2020 325 902
- US-A1- 2022 235 797
- US-A1- 2022 389 933

## Beschreibung

Die Erfindung betrifft ein Vakuumgerät mit einer Vakuumkammer und einer Vakuumpumpe, die ausgebildet ist, um in die Vakuumkammer eingefügt zu werden und die Erfindung betrifft ebenfalls eine solche Vakuumpumpe.

Vakuumpumpen sind üblicherweise eigenständige Einheiten, die ein eigenes Gehäuse aufweisen und beispielsweise über eine Flanschverbindung an einer Einlassöffnung des Gehäuses mit einer Vakuumkammer oder mit einer weiteren Vakuumpumpe verbunden werden können. Ferner gibt es sogenannte Cartridge-Vakuumpumpen, die derart in eine Außenwand einer Vakuumkammer eingefügt werden können, dass diese Außenwand sozusagen einen Teil des Gehäuses der Vakuumpumpe bildet.

Eine solche Cartridge-Bauform wird beispielsweise bei sogenannten Split-Flow-Turbomolekularpumpen verwendet, die neben einem Haupteinlass weitere Einlassöffnungen bzw. Ports aufweisen, um ein differentielles Pumpen auf unterschiedlichen Druckniveaus zu ermöglichen. Die zusätzlichen Ports sind bei einer solchen Pumpe typischerweise seitlich angeordnet, d.h. seitlich bezogen auf eine Drehachse eines Rotors der Turbomolekularpumpe.

Die verschiedenen Abschnitte einer solchen Vakuumpumpe, die sich im Betrieb der Vakuumpumpe auf unterschiedlichen Druckniveaus befinden, müssen jedoch gegeneinander abgedichtet werden, um Rückströmungen innerhalb der Vakuumpumpe zu vermeiden oder zumindest zu verringern. Um die Abschnitte der Vakuumpumpe mit jeweiligen Einlassöffnungen bzw. Ports gegeneinander abzudichten, werden üblicherweise umlaufende elastomerische Dichtungen verwendet, die beispielsweise als O-Ringe ausgebildet und in axialer Richtung verpresst sind, d.h. in einer Richtung parallel zu der Drehachse des Rotors der Vakuumpumpe.

Aufgrund der elastomerischen umlaufenden Dichtungen kann bei einer solchen Cartridge-Vakuumpumpe eine relativ große Spaltbreite zwischen der Cartridge-Vakuumpumpe und einer Vakuumkammer gewählt werden. Da folglich ein ausreichendes Spiel zwischen der Cartridge-Vakuumpumpe und der Vakuumkammer vorhanden ist, ist eine zuverlässige und relativ einfache Montage einer solchen Cartridge-Vakuumpumpe möglich.

Nachteilig ist bei der Verwendung solcher axial verpresster elastomerischer Dichtungen, dass eine gestufte, "tannenbaumartige" Form des Cartridge-Gehäuses der Vakuumpumpe erforderlich ist, bei welcher der Durchmesser der jeweiligen Abschnitte der Vakuumpumpe ausgehend von einer Niederdruckseite in axialer Richtung zunimmt, um die verschiedenen Abschnitte bzw. Dichtebenen der Vakuumpumpe mit der jeweiligen Gegenseite an der Vakuumkammer zum Abdichten in Eingriff zu bringen. Eine solche "tannenbaumartige" Form des Cartridge-Gehäuses der Vakuumpumpe erfordert daher einen relativ großen Bauraum.

In radialer Richtung verpresste Dichtungen zwischen den verschiedenen Abschnitten einer Cartridge-Vakuumpumpe auf unterschiedlichen Druckniveaus könnten zwar bei einem nahezu gleichen Durchmesser bezogen auf die Drehachse des Rotors angeordnet werden. Da solche radial verpressten Dichtungen jedoch eine tangentiale Scherung erfordern, um diese in Eingriff zu bringen, würden relativ starke Reibungskräfte beim Einschieben einer solchen Cartridge-Vakuumpumpe in eine Vakuumkammer auftreten. Diese Reibungskräfte sind jedoch in der Praxis meistens zu groß, und außerdem besteht das Risiko des Verklemmens der verschiedenen Abschnitte der Vakuumpumpe und der Vakuumkammer.

Da Cartridge-Vakuumpumpen mit radial verpressten Dichtungen jedoch einen kompakten Aufbau der Vakuumpumpe mit verringertem Bauraum ermöglichen, wurden spezielle Beschichtungen elastomerischer Dichtungen in Betracht gezogen, beispielsweise mit PTFE ("Teflon"). Dies ist beispielsweise in der WO 2018/229473 A1 beschrieben. Die speziellen Beschichtungen der elastomerischen Dichtungen erfordern jedoch einen zusätzlichen Aufwand.

Die DE 20 2013 003 855 U1 beschreibt eine Catridge-Vakuumpumpe mit mehreren Pumpstufen, wobei zwischen einigen der Pumpstufen jeweils eine Dichtung mit einem elastomeren Dichtelement vorgesehen ist, wobei diese Dichtung mit einer Spaltdichtung kombiniert werden kann.

Die WO 99/61799 A1 beschreibt ebenfalls eine Catridge-Vakuumpumpe, wobei eine einschubförmige Einheit mit einem elastomeren Dichtelement abgedichtet ist.

In der WO 2009/028099 A1 ist eine Vakuumpumpe beschrieben, die eine Spaltdichtung ohne die Verwendung einer elastomeren Dichtung zwischen Statorringen und Distanzringen der Vakuumpumpe aufweist.

Die US 2022/0235797 A1 beschreibt ebenfalls eine Vakuumpumpe mit einer ähnlichen Spaltdichtung zwischen einem Stator und einem Gehäuse.

In der US 2022/0389933 A1 ist eine Vakuumpumpe beschrieben, bei der eine ähnliche Spaltdichtung zwischen einer Magnethalterung und einem Gehäuse der Vakuumpumpe vorgesehen ist.

Die US 2019/0195234 A1 beschreibt eine Vakuumpumpe, bei der eine Spaltdichtung zusätzlich zu einer elastomeren Dichtung zwischen zwei Abschnitten eines Gehäuses der Vakuumpumpe vorgesehen ist.

In der DE 10 2014 012 317 A1 ist eine Splitflow-Vakuumpumpe beschrieben, die in ein Gehäuse eines Vakuumpumpsystems eingefügt ist und mehrere

Pumpstufen aufweist, zwischen denen Elastomerdichtungen oder Metalldichtungen vorgesehen sind.

Die US 2017/0102009 A1 beschreibt eine tauchbare Brunnenpumpe, bei der Spaltdichtungen zwischen bestimmten Komponenten vorgesehen sind.

In der US 2020/0325902 A1 einen Kompressorgehäuse für einen Turbolader beschrieben, das Spaltdichtungen aufweist.

Die DE 42 42 290 A1 beschreibt Dichtungseinrichtungen für drucktragende Elemente, die beispielsweise in Filtersystemen verwendet werden können und Spaltdichtungen aufweisen.

Eine Aufgabe der Erfindung besteht darin, ein Vakuumgerät zu schaffen, das eine Vakuumpumpe und eine Vakuumkammer umfasst und bei dem eine einfache und effiziente Abdichtung zwischen Abschnitten auf unterschiedlichen Druckniveaus erreicht wird.

Diese Aufgabe wird durch ein Vakuumgerät mit den Merkmalen des Anspruchs 1 gelöst. Vorteilhafte Weiterbildungen der Erfindung sind in den Unteransprüchen 2-11, der Beschreibung und den Zeichnungen angegeben. Weiterer Gegenstand der Erfindung ist ferner eine Vakuumpumpe mit den Merkmalen des Anspruchs 12.

Das Vakuumgerät umfasst eine innere Wand und eine äußere Wand, welche die innere Wand derart umgibt, dass ein Spalt zwischen der inneren Wand und der äußeren Wand gebildet ist. Der Spalt weist zumindest einen Dichtbereich auf, in welchem der Spalt einen vorbestimmten Abstand zwischen der inneren Wand und der äußeren Wand aufweist. Der Dichtbereich ist zwischen zwei Bereichen des Spalts angeordnet, in denen ein jeweiliger Abstand zwischen der inneren Wand und der äußeren Wand größer als der vorbestimmte Abstand zwischen der inneren Wand und der äußeren Wand in dem Dichtbereich ist.

Während des Betriebs des Vakuumgeräts kann in einem der zwei Bereiche des Spalts, zwischen denen der Dichtbereich angeordnet ist, ein höherer Druck vorliegen als in dem anderen der zwei Bereiche. Der Dichtbereich stellt somit eine Spaltdichtung dar, die ausschließlich durch die innere und äußere Wand des Vakuumgeräts gebildet ist und beispielsweise keine elastomerische Dichtung in der Form eines O-Rings oder andere Dichtmaterialien erfordert. Das Vakuumgerät weist somit mindestens eine solche Spaltdichtung auf. Dies schließt jedoch nicht aus, dass das Vakuumgerät zusätzlich zu einer solchen Spaltdichtung weitere Dichtungen aufweist.

Der vorbestimmte Abstand kann einen Wert von maximal ein bis zwei Zehntel Millimetern aufweisen, wobei jedoch ein Wert von weniger als 50 Mikrometern bevorzugt ist. Ferner kann der vorbestimmte Abstand nahezu Null sein, so dass sich die innere Wand und die äußere Wand über deren Umfang zumindest teilweise berühren.

Innerhalb des Dichtbereichs weist der Spalt zwischen der inneren Wand und der gegenüberliegenden äußeren Wand eine Breite auf, die geringer als die Breite des Spalts in den beiden Bereichen außerhalb des Dichtbereichs ist. Da die Spaltdichtung bzw. der Dichtbereich des Spalts durch eine Verengung des Spalts bzw. durch eine Verringerung des Abstands zwischen der inneren Wand und der äußeren Wand gebildet ist, kann der Verlauf des Spalts kontinuierlich über den Dichtbereich fortgesetzt werden, ohne dass beispielsweise eine Vergrößerung des Umfangs der inneren und/oder äußeren Wand über den Dichtbereich hinweg erforderlich ist. Wenn die innere Wand beispielsweise von einer Cartridge-Vakuumpumpe gebildet ist, die einen Rotor mit einer in axialer Richtung verlaufenden Drehachse aufweist, kann der Dichtbereich nahezu parallel zu der axialen Richtung verlaufen.

Da somit bei dem erfindungsgemäßen Vakuumgerät keine Vergrößerung des Umfangs der inneren Wand erforderlich ist, um den Dichtbereich zu bilden, ist kein zusätzlicher Bauraum für eine Abdichtung zwischen den Bereichen notwendig, zwischen denen sich der Dichtbereich befindet. Insbesondere erfolgt eine Verringerung des Bauraums für das Vakuumgerät beispielsweise im Vergleich mit einem eingangs beschriebenen Vakuumgerät, welches ein gestuftes, "tannenbaumartiges" Cartridge-Gehäuse einer Vakuumpumpe umfasst, welches die innere Wand des Vakuumgeräts bildet. Ferner sind für den Dichtbereich keine zusätzlichen Elemente wie beispielsweise speziell beschichtete elastomerische Dichtungen erforderlich, da der Dichtbereich als Spaltdichtung ausschließlich durch die innere und die äußere Wand gebildet ist.

Erfindungsgemäß umfasst das Vakuumgerät eine Vakuumpumpe, welche die innere Wand aufweist, und eine Vakuumkammer, welche die äußere Wand aufweist. Die äußere Wand der Vakuumkammer ist zum Aufnehmen der inneren Wand der Vakuumpumpe ausgebildet. Mit anderen Worten umfasst das Vakuumgerät eine Cartridge-Vakuumpumpe, die in die Vakuumkammer eingefügt bzw. eingeschoben ist. Der Dichtbereich kann zwischen zumindest zwei Pumpstufen der Vakuumpumpe vorgesehen sein. Der Dichtbereich bildet somit wiederum eine Spaltdichtung, die lediglich durch die innere Wand an der Vakuumpumpe und die äußere Wand der Vakuumkammer gebildet ist und keine weiteren Dichtelemente erfordert. Dies ermöglicht eine effiziente Abdichtung zwischen den Pumpstufen der Vakuumpumpe, welche wenig Bauraum für die Vakuumpumpe erfordert.

Die Vakuumpumpe kann ferner mehrere Pumpstufen aufweisen, beispielsweise mehr als zwei Pumpstufen, und ein jeweiliger Dichtbereich kann zwischen jeweils zwei Pumpstufen der Vakuumpumpe vorgesehen sein. Ferner kann in einem axialen Bereich zwischen jeweils zwei Pumpstufen der Vakuumpumpe eine Zwischenabsaugung vorgesehen sein.

Die Zwischenabsaugung kann beispielsweise in axialer Richtung der Vakuumpumpe in der Nähe zumindest eines Dichtbereichs angeordnet sein oder zwischen zwei Dichtbereichen, welche die zwei Pumpstufen der Vakuumpumpe voneinander trennen, die sich auf unterschiedlichem Druckniveau befinden. Alternativ kann die Zwischenabsaugung auch zwischen einer Spaltdichtung mit einem Dichtbereich, der durch die innere und die äußere Wand des Vakuumgeräts gebildet ist, und einer elastomerischen Dichtung angeordnet sein, die diejenige Pumpstufe der Vakuumpumpe begrenzt, die sich im Vergleich zu mindestens einer weiteren Pumpstufe auf höherem Druckniveau befindet. Eine solche elastomerische Dichtung kann im Gegensatz zu der Spaltdichtung zwischen der inneren und äußeren Wand des Vakuumgeräts axial verpresst sein.

Gemäß einer weiteren Ausführungsform können mehrere Dichtbereiche entlang des Spalts angeordnet sein. Die Dichtbereiche können ebenso wie der Spalt zwischen der inneren Wand und der äußeren Wand im Wesentlichen in einer axialen Richtung verlaufen, beispielsweise im Wesentlichen parallel zu einer Drehachse eines Rotors einer Vakuumpumpe. Ferner können die mehreren Dichtbereiche bezüglich einer solchen Drehachse des Rotors der Vakuumpumpe zentriert sein. Die mehreren Dichtbereiche ermöglichen einen schrittweisen Übergang zwischen verschiedenen Pumpstufen beispielsweise einer Vakuumpumpe auf unterschiedlichen Druckniveaus, d.h. beispielsweise von einem Hochvakuumbereich bis zu einem Feinvakuumbereich auf erheblich höherem Druckniveau.

Der Dichtbereich kann sich bezogen auf mindestens einen der zwei Bereiche des Spalts, zwischen denen der Dichtbereich angeordnet ist, unter einem vorbestimmten Winkel erstrecken, wobei sich der Dichtbereich insbesondere rechtwinklig zu mindestens einem der zwei Bereiche außerhalb des Dichtbereichs oder in die gleiche Richtung wie diese zwei Bereiche erstrecken kann. Der vorbestimmte Winkel kann bei diesen Spezialfällen folglich 90° oder 0° betragen. Ferner ist ein schräger oder konischer Verlauf des Spalts innerhalb des Dichtbereichs möglich, d.h. unter einem Winkel von etwa 45° bezogen auf mindestens einen der Bereiche außerhalb des Dichtbereichs.

Wenn die innere Wand einer Vakuumpumpe und die äußere Wand einer Vakuumkammer miteinander in Berührung kommen, nämlich wenn eine Cartridge-Vakuumpumpe in eine Vakuumkammer eingeschoben wird, kann eine konische Anordnung des Dichtbereichs, d.h. unter etwa 45°, und ein gestufter, rechtwinkliger Verlauf des Dichtbereichs bezogen auf die axiale Richtung den Vorteil aufweisen, dass geringe oder vernachlässigbare Scherkräfte auftreten und somit die Reibungskräfte zwischen der inneren und äußeren Wand verringert sind.

Ferner kann eine zusätzliche Dichtung zwischen dem Spalt und einem Außenbereich des Vakuumgeräts angeordnet sein, in welchem Atmosphärendruck vorliegt. Eine solche zusätzliche Dichtung kann sich somit beispielsweise in axialer Richtung einer Vakuumpumpe außerhalb des Dichtbereichs befinden, der die Spaltdichtung bindet, und diese gegenüber Atmosphärendruck abdichten. Bei dieser zusätzlichen Dichtung kann es sich beispielsweise um eine elastomerische Dichtung in der Form eines O-Rings handeln. Bei einer solchen Ausführungsform erfordert das Vakuumgerät jedoch lediglich eine einzige zusätzliche Dichtung zur Isolierung der auf niedrigerem Druckniveau liegenden Spaltdichtungen bzw. Dichtbereiche.

Gemäß einer weiteren Ausführungsform kann in mindestens einem Dichtbereich zwischen der inneren Wand und der äußeren Wand des Vakuumgeräts ein metallischer Kontakt zwischen der inneren Wand und der äußeren Wand vorhanden sein. Ein solcher metallischer Kontakt kann auch als "Auflagerpunkt" einer Cartridge-Vakuumpumpe innerhalb einer Vakuumkammer bezeichnet werden. Der metallische Kontakt kann vorteilhaft sein, wenn das Vakuumgerät beispielsweise für den Ultrahochvakuumbereich vorgesehen ist, da eine metallische Dichtung ein erheblich besseres Ausgasverhalten als beispielsweise eine elastomerische Dichtung aufweist. Ferner kann ein metallischer Kontakt eine Übertragung von Wärme verbessern, was beispielsweise beim Ausheizen des Vakuumgeräts vorteilhaft sein kann.

Alternativ können die innere Wand und die äußere Wand frei von einem metallischen Kontakt sein. Einer oder mehrere Dichtbereiche können bei einer solchen Ausführungsform derart bezüglich des Abstands zwischen der inneren und der äußeren Wand konfiguriert sein, dass der jeweilige Dichtbereich bzw. die jeweilige Spaltdichtung an die gewünschte Druckdifferenz über den jeweiligen Dichtbereich hinweg angepasst ist. Zusätzlich kann eine elastomerische Dichtung zur Abdichtung gegenüber dem Atmosphärendruck vorgesehen sein, d.h. sozusagen als letzte Dichtung vor dem Übergang in den Außenraum des Vakuumgeräts. Wenn die innere und die äußere Wand des Vakuumgeräts frei von einem metallischen Kontakt sind, kann eine Abkopplung von Schwingungen zwischen einer Vakuumkammer und einer Vakuumpumpe des Vakuumgeräts erfolgen.

Gemäß einer weiteren Ausführungsform kann ein Verhältnis einer Länge des Dichtbereichs entlang des Spalts und des vorbestimmten Abstands zwischen der inneren Wand und der äußeren Wand innerhalb des Dichtbereichs größer als 5 und bevorzugt größer als 10 sein. Der vorbestimmte Abstand kann auch als Höhe des Dichtspalts in einer Richtung rechtwinklig zu der inneren und der äußeren Wand bezeichnet werden. Je größer die Länge des Dichtbereichs entlang des Spalts bzw. des Spalts innerhalb des Dichtbereichs im Verhältnis zum vorbestimmten Abstand bzw. zur Spalthöhe innerhalb des Dichtbereichs ist, umso geringer ist der vakuumtechnische Leitwert des Dichtbereichs, so dass umgekehrt dessen abdichtende Wirkung zunimmt.

Eine Höhe des Spalts innerhalb des Dichtbereichs bzw. der vorbestimmte Abstand zwischen der inneren und der äußeren Wand innerhalb des Dichtbereichs kann nicht größer als 0,2 mm und bevorzugt nicht größer als 0,05 mm sein. Die erforderliche Konfiguration des vorbestimmten Abstands bzw. der Spalthöhe innerhalb des Dichtbereichs hängt von der notwendigen Abdichtung ab, d.h. von der geforderten Druckdifferenz über den jeweiligen Dichtbereich hinweg, welche wiederum von der Rückströmung, der Gasart, dem internen Saugvermögen der Pumpe und der anfallenden Gaslast abhängt.

Es hat sich jedoch gezeigt, dass ein enges Spaltmaß von 0,2 mm oder weniger innerhalb des Dichtbereichs für praktische Anwendungen erforderlich ist. Ein sehr geringer vorbestimmter Abstand zwischen der inneren und der äußeren Wand innerhalb des Dichtbereichs, beispielsweise von weniger als 0,05 mm, kann durch Verringerung von Bauteiltoleranzen und eine Verbesserung der Oberflächengüte der inneren Wand und der äußeren Wand erreicht werden. Je geringer der vorbestimmte Abstand gewählt wird, umso höher sind jedoch die Produktionskosten für die entsprechenden Komponenten des Vakuumgeräts welche die innere und die äußere Wand bilden.

Der vorbestimmte Abstand zwischen der inneren und der äußeren Wand kann innerhalb des Dichtbereichs beispielsweise Werte ab 0,05 mm und kleiner als 0,1 mm, an 0,1 mm und kleiner als 0,15 mm oder ab 0,15 mm und kleiner als 0,2 mm annehmen. Da die äußere Wand die innere Wand umgibt und die innere Wand ringförmig um eine Längsachse einer Vakuumpumpe herum verläuft, kann der tatsächliche Abstand zwischen der inneren Wand und der äußeren Wand entlang des Umfangs der äußeren Wand schwanken, d.h. keine konstante Größe sein. Der vorbestimmte Abstand zwischen der inneren Wand und der äußeren Wand kann daher der Mittelwert eines Spaltmaßes entlang des Umfangs der äußeren Wand bezüglich der inneren Wand sein. Die vorstehend genannten Bereiche für den vorbestimmten Abstand bzw. die Spaltbreite innerhalb des Dichtbereichs beziehen sich somit jeweils auf Mittelwerte dieses Spaltmaßes entlang des Umfangs der inneren und der äußeren Wand.

Ferner kann eine Länge des Dichtbereichs entlang des Spalts größer als 5 mm und bevorzugt größer als 40 mm sein. Alternativ kann die Länge des Dichtbereichs entlang des Spalts auch kleiner als 5 mm sein, wobei jedoch in diesem Fall der vorbestimmte Abstand zwischen der inneren und der äußeren Wand innerhalb des Dichtbereichs sehr klein sein sollte, beispielsweise kleiner als 0,05 mm, um dadurch einen möglichst geringen vakuumtechnischen Leitwert für eine ausreichende Abdichtung über den Dichtbereich bereitzustellen. Ferner kann die Länge des Dichtbereichs entlang des Spalts Werte größer als 5mm bis einschließlich 10 mm, größer als 10 mm bis einschließlich 15 mm oder größer als 15 mm bis einschließlich 40 mm annehmen oder größer als 40 mm sein. Dabei ist jedoch jeweils der vorbestimmte Abstand zwischen der inneren und äußeren Wand innerhalb des Dichtbereichs derart auszuwählen, dass eine geforderte Druckdifferenz über den Dichtbereich erreicht werden kann.

Weiterer Gegenstand der Erfindung ist ferner eine Vakuumpumpe mit den Merkmalen des Anspruchs 12. Eine solche Vakuumpumpe ist ausgebildet, um in eine Vakuumkammer eingefügt zu werden, und weist eine Wand auf, die ringförmig um eine Längsachse der Vakuumpumpe herum verläuft. Die Wand der Vakuumpumpe umfasst zumindest einen Abschnitt, der eine solche Distanz bezüglich der Längsachse aufweist, dass der Abschnitt mit einer gegenüberliegenden Wand der Vakuumkammer zumindest einen Dichtbereich bildet, in welchem ein Spalt zwischen der Wand der Vakuumpumpe und der gegenüberliegenden Wand der Vakuumkammer eine Breite aufweist, die geringer als eine Breite des Spalts außerhalb des Dichtbereichs ist.

Mit anderen Worten ist die Vakuumpumpe dafür vorgesehen, beim Einfügen in eine Vakuumkammer mindestens eine Spaltdichtung mit einer Wand der Vakuumkammer zu bilden. Der Dichtbereich ist folglich zwischen zwei Bereichen des Spalts zwischen der Vakuumpumpe und der Vakuumkammer angeordnet, in denen ein jeweiliger Abstand zwischen der Wand der Vakuumpumpe und der Wand der Vakuumkammer größer als ein vorbestimmter Abstand zwischen diesen Wänden innerhalb des Dichtbereichs ist

Nachfolgend wird die Erfindung beispielhaft anhand vorteilhafter Ausführungsformen unter Bezugnahme auf die beigefügten Figuren beschrieben. Die Erfindung wird jedoch ausschließlich durch die Ansprüche definiert. Es zeigen, jeweils schematisch:
- Fig. 1: eine beispielhafte Cartridge-Vakuumpumpe gemäß dem Stand der Technik,
- Fig. 2: ein erfindungsgemäßes Vakuumgerät mit einer Vakuumpumpe und einer Vakuumkammer, zwischen denen mindestens eine Spaltdichtung vorgesehen ist,
- Fig. 3: eine Ausführungsform mit einer konisch verlaufenden Spaltdichtung zwischen der Vakuumpumpe und der Vakuumkammer des Vakuumgeräts,
- Fig. 4: eine weiteres Ausführungsform mit einer radial verlaufenden Spaltdichtung zwischen der Vakuumpumpe und der Vakuumkammer,
- Fig. 5: eine weitere Ausführungsform des Vakuumgeräts, bei dem mindestens eine von mehreren Spaltdichtungen einen metallischen Kontakt zwischen der Vakuumpumpe und der Vakuumkammer herstellt, und
- Fig. 6: eine weitere Ausführungsform des Vakuumgeräts mit einer Zwischenabsaugung.

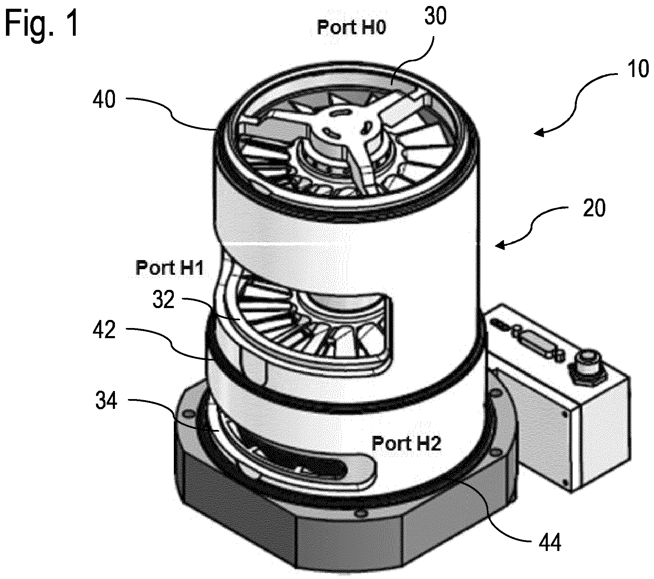

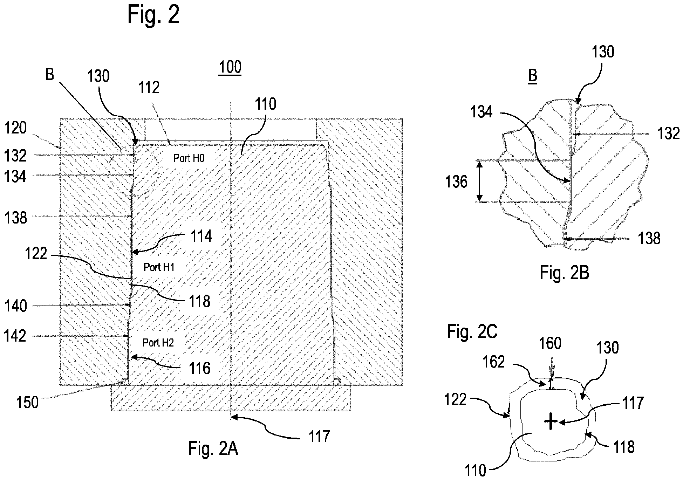

Fig. 1 zeigt eine beispielhafte Split-Flow-Turbomolekularpumpe 10, die ein rundes, sogenanntes Cartridge-Gehäuse 20 und drei Einlassöffnungen bzw. Ports 30, 32, 34 aufweist. Mittels des Cartridge-Gehäuses 20 kann die Turbomolekularpumpe 10 in eine Vakuumkammer eingefügt bzw. eingeschoben werden. Eine solche Einfügung einer Vakuumpumpe in eine Vakuumkammer ist in der Schnittansicht von Fig. 2A schematisch dargestellt.

Die drei Einlassöffnungen 30, 32, 34 der Turbomolekularpumpe umfassen eine Einlassöffnung 30 bzw. einen Port H0, die bzw. der eine Haupt-Einlassöffnung der Turbomolekularpumpe 10 darstellt und sich auf dem niedrigsten Druckniveau p0 befindet, das die Turbomolekularpumpe 10 im Betrieb erreicht. Der Port H0 ist an einem axialen Ende der Turbomolekularpumpe 10 angeordnet und bezüglich einer Längsachse der Turbomolekularpumpe 10 zentriert, die gleichzeitig eine Drehachse für einen Rotor der Turbomolekularpumpe 10 darstellt.

Die beiden weiteren Einlassöffnungen 32, 34 der Turbomolekularpumpe 10 umfassen zwei weitere Ports H1 und H2, die seitlich an dem Cartridge-Gehäuse 20 der Turbomolekularpumpe 10 angeordnet sind. Der Port H1 befindet sich im Betrieb der Turbomolekularpumpe 10 auf einem Druckniveau p1, das höher als das Druckniveau p0 an dem Port H0 ist, während sich der Port H2 im Betrieb der Turbomolekularpumpe 10 auf einem Druckniveau p2 befindet, das höher als das Druckniveau p1 an dem Port H1 und somit auch größer als das Druckniveau p0 an dem Port H0 ist.

Aufgrund der unterschiedlichen Druckniveaus p0, p1 und p2 an den Ports H0, H1 bzw. H2 der Turbomolekularpumpe 10 ist während deren Betrieb eine Abdichtung zwischen den jeweiligen Bereichen bzw. Ports der Turbomolekularpumpe 10 erforderlich. Die Abdichtung zwischen den verschiedenen Druckniveaus p0, p1 und p2 bzw. zwischen den Ports H0, H1, H2 sowie zwischen dem Port H2 und dem Atmosphärendruck außerhalb der Turbomolekularpumpe 10 erfolgt durch jeweilige elastomerische Dichtungen 40, 42, 44, die jeweils als umlaufender O-Ring ausgebildet sind.

Die elastomerischen Dichtungen 40, 42, 44 sind bei der beispielhaften Turbomolekularpumpe 10 gemäß dem Stand der Technik in axialer Richtung verpresst, d.h. in einer Richtung parallel zu der Längsachse der Turbomolekularpumpe 10. Dadurch weist die Turbomolekularpumpe 10 eine gestufte, "tannenbaumartige" Form auf, bei welcher der Durchmesser jeweiliger Abschnitte der Turbomolekularpumpe 10 ausgehend von dem Port H0 in Richtung des gegenüberliegenden axialen Endes der Turbomolekularpumpe 10 immer weiter zunimmt. Gleichermaßen nimmt auch der jeweilige Durchmesser der O-Ringe in axialer Richtung ausgehend von dem Port H0 zu, welche die jeweiligen elastomerischen Dichtungen 40, 42, 44 bilden. Aufgrund dieser gestuften, "tannenbaumartigen" Form mit zunehmendem Durchmesser der jeweiligen Abschnitte benötigt die Turbomolekularpumpe 10 gemäß dem Stand der Technik einen relativ großen Bauraum, wenn diese an einer Vakuumkammer angebracht werden soll.

Dementsprechend zeigt Fig. 2 ein erfindungsgemäßes Vakuumgerät 100, welches eine Vakuumpumpe 110, die als Turbomolekularpumpe ausgebildet ist, und eine Vakuumkammer 120 umfasst. Ebenso wie die in Fig. 1 dargestellte Turbomolekularpumpe 10 weist die Vakuumpumpe 110 ein Cartridge-Gehäuse auf, damit die Vakuumpumpe 110 in die Vakuumkammer 120 eingefügt bzw. eingeschoben werden kann. Ferner weist die Vakuumpumpe 110 ebenfalls eine erste Einlassöffnung 112, die als Port H0 bezeichnet wird und an einer axialen Oberseite der Vakuumpumpe 110 angeordnet ist, sowie zwei seitlich angeordnete Einlassöffnungen 114, 116 auf, die als Port H1 bzw. als Port H2 bezeichnet werden. Die beiden seitlichen Einlassöffnungen 114, 116 erlauben ein differentielles Pumpen mittels der Vakuumpumpe 110, so dass diese wiederum als Split-Flow-Turbomolekularpumpe ausgebildet ist.

Die Vakuumpumpe 110 umfasst ferner eine Längsachse 117, die gleichzeitig eine Drehachse für einen nicht dargestellten Rotor der Vakuumpumpe 110 ist. Beim Einfügen der Vakuumpumpe 110 in die Vakuumkammer 120 ist die Vakuumpumpe 110 darüber hinaus bezüglich der Längsachse 117 zentriert.

Das Vakuumgerät 100 umfasst eine innere Wand 118, die durch das Cartridge-Gehäuse der Vakuumpumpe 110 gebildet ist, und eine äußere Wand 122 der Vakuumkammer 120. Zwischen der inneren Wand 118 und der äußeren Wand 120 ist ein Spalt 130 gebildet, der in Fig. 2B und Fig. 2C vergrößert dargestellt ist. Der Spalt 130 weist entlang eines Verlaufs von der Einlassöffnung 112 bzw. dem Port H0 bis zu der Einlassöffnung 116 bzw. dem Port H2 zwei Dichtbereiche 134, 140 auf, in welchen der Spalt 130 eine verringerte Breite bzw. einen vorbestimmten, verringerten Abstand zwischen der inneren Wand 118 und der äußeren Wand 122 aufweist.

Fig. 2B zeigt eine vergrößerte Darstellung des Abschnitts "B" von Fig. 2A, der den ersten Dichtbereich 134 zwischen dem Port H0 und dem Port H1 umfasst. Der erste Dichtbereich 134 ist zwischen zwei Bereichen 132, 138 des Spalts 130 angeordnet, in welchen ein jeweiliger Abstand zwischen der inneren Wand 118 und der äußeren Wand 122 größer als der vorbestimmte Abstand bzw. die Spaltbreite zwischen der inneren Wand 118 und der äußeren Wand 122 in dem Dichtbereich 134 ist.

Mit anderen Worten weist der Dichtbereich 134 entlang seiner Länge 136 entlang des Spalts 130 eine verringerte Breite auf, d.h. eine Breite zwischen der inneren Wand 118 und der äußeren Wand 122, die geringer als die Breite des Spalts 130 in den Bereichen 132, 138 ist, zwischen denen der Dichtbereich 134 angeordnet ist. Gleiches gilt für den in Fig. 2A dargestellten zweiten Dichtbereich 140, der zwischen dem Port H1 und dem Port H2 sowie zwischen dem Bereich 138 und einem weiteren Bereich 142 des Spalts 130 angeordnet ist, in welchem der Spalt 130 eine größere Breite als in dem Dichtbereich 140 aufweist.

An ihrem axialen Ende, das dem axialen Ende des Ports H0 entgegengesetzt ist, weist die Vakuumpumpe 110 eine elastomerische Dichtung 150 auf, die als umlaufender O-Ring ausgebildet ist. Mittels der elastomerischen Dichtung 150 sind der Spalt 130 und damit die gesamte Vakuumpumpe 110 gegenüber Atmosphärendruck abgedichtet.

Wie in Fig. 2C dargestellt ist, können die innere Wand 118 und die äußere Wand 122 des Vakuumgeräts 100 von einer idealen koaxialen Form abweichen, so dass der Spalt 130 an jeder Position entlang des Umfangs der Vakuumpumpe 110 eine unterschiedliche Breite aufweist, wie dies beispielhaft mittels der Breite 162 an der Position 160 dargestellt ist. Der vorbestimmte Abstand zwischen der inneren Wand 118 und der äußeren Wand 122 innerhalb des Dichtbereichs 134, 140 bezieht sich daher auf einen Mittelwert des Spaltmaßes bzw. der Breite des Spalts 130 über den Umfang der Vakuumpumpe 110.

Bei dem in Fig. 2A dargestellten Beispiel weist der Dichtbereich 134, 140 einen vorbestimmten Abstand zwischen der inneren Wand 118 und der äußeren Wand 122 von etwa 0,061 mm auf, wobei unter Berücksichtigung von Durchmessertoleranzen ein Bereich von 0,025 mm bis 0,097 mm für die Breite des Spalts 130 innerhalb der Dichtbereiche 134, 140 vorgegeben ist. Es hat sich gezeigt, dass die Breite des Spalts 130 innerhalb der Dichtbereiche 134, 140 kleiner als 0,2 mm sein sollte. Die Länge 136 des Dichtbereichs 134 entlang des Spalts 130 liegt in einem Bereich zwischen 5 und etwa 40 mm, wobei im Beispiel von Fig. 2A konkret eine Länge 136 von etwa 15 mm verwendet wurde.

Der Dichtbereich 134 dichtet ein Druckniveau p0 an dem Port H0 bzw. der Einlassöffnung 112 gegenüber einem Druckniveau p1 an dem Port H1 bzw. der Einlassöffnung 114 ab, welches größer als das Druckniveau p0 an dem Port H0 ist. Ebenso dichtet der zweite Dichtbereich 140 das Druckniveau p1 an dem Port H1 gegenüber einem Druckniveau p2 an dem Port H2 bzw. der Einlassöffnung 116 ab, welches wiederum größer als das Druckniveau p1 ist. Die Dichtwirkung der Dichtbereiche 134, 140 ist durch den vakuumtechnischen Leitwert entlang des jeweiligen Dichtbereichs 134, 140 gegeben. Je geringer der vakuumtechnische Leitwert ist, umso besser ist die Dichtwirkung des jeweiligen Dichtbereichs bzw. der jeweiligen Spaltdichtung 134, 140. Der vakuumtechnische Leitwert ist wiederum umso geringer, je größer das Verhältnis der Länge 136 des Dichtbereichs 134 entlang des Spalts 130 zu der Breite des Spalts 130 innerhalb des Dichtbereichs 134, 140 ist. Im vorliegenden Beispiel ist dieses Verhältnis größer als 5.

Mit Hilfe der beiden Dichtbereiche 134, 140 erfolgt insgesamt eine Abdichtung zwischen den verschiedenen Druckniveaus p0, p1 und p2 innerhalb der Vakuumpumpe 110, ohne dass eine axial verpresste elastomerische Dichtung erforderlich ist. Aufgrund der beiden Dichtbereiche bzw. Spaltdichtungen 134, 140, die sich in dem Beispiel von Fig. 2A in axialer Richtung erstrecken, nimmt der radiale Durchmesser der Vakuumpumpe 110 zwischen dem Port H0 und dem Port H2 nur unwesentlich zu, d.h. erheblich geringer als bei der Turbomolekularpumpe 10 gemäß dem Stand der Technik, die in Fig. 1 dargestellt ist. Dadurch erfordert die Vakuumpumpe 110 im Vergleich zur Turbomolekularpumpe 10 von Fig. 1 weniger Bauraum, wenn sie in die Vakuumkammer 120 eingefügt wird. Die elastomerische Dichtung 150, die im vorliegenden Beispiel von Fig. 2A die einzige elastomerische Dichtung ist, ist jedoch zum Abdichten der Vakuumpumpe 110 gegenüber dem Atmosphärendruck erforderlich, da die Druckdifferenz zwischen dem Druckniveau p2 im Bereich des Ports H2 und im Atmosphärendruck für eine Spaltdichtung zu groß ist.

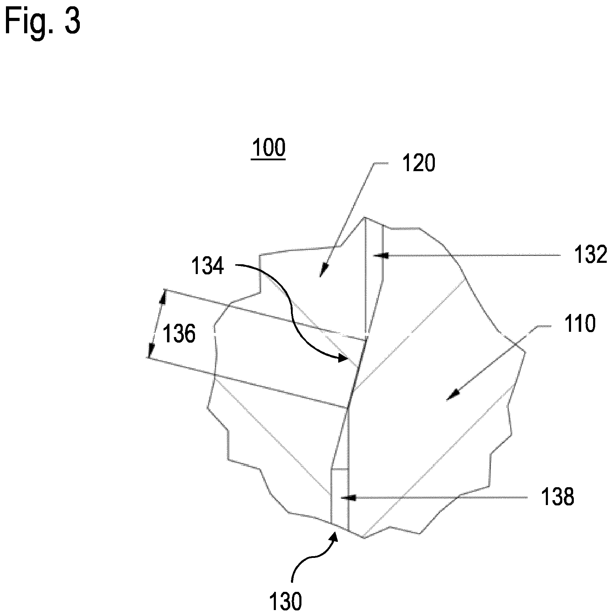

Fig. 3 zeigt einen Abschnitt einer Ausführungsform des Vakuumgeräts 100, bei welcher der Dichtbereich 134 im Gegensatz zu der in Fig. 2A und Fig. 2B dargestellten Ausführungsform nicht in axialer Richtung, sondern schräg bzw. konisch verläuft. Im Detail verläuft der Dichtbereich 134 des Spalts 130 zwischen der Vakuumpumpe 110 und der Vakuumkammer 120 unter einem vorbestimmten Winkel bezogen auf die axiale Richtung, die durch die Längsachse 117 (vgl. Fig. 2A) der Vakuumpumpe 110 vorgegeben ist. Ebenso verläuft der Dichtbereich 134 bezogen auf die weiteren Bereiche 132, 138 des Spalts 130, zwischen denen der Dichtbereich 134 angeordnet ist, unter dem vorbestimmten Winkel in einer schrägen Richtung, so dass der Dichtbereich 134 eine konische Ringfläche bildet.

Der Vorteil des schrägen bzw. konischen Verlaufs des Dichtbereichs 134 besteht darin, dass im Vergleich zu dem in Fig. 2A dargestellten axialen Verlauf geringere Reibungskräfte auftreten, wenn die Vakuumpumpe 110 in die Vakuumkammer 120 eingefügt wird. Der schräge bzw. konische Verlauf des Dichtbereichs 134 führt jedoch zu einer Vergrößerung des radialen Durchmessers der Vakuumpumpe 110 über den Dichtbereich bzw. die Spaltdichtung 134, d.h. auf eine ähnlich Weise, aber in geringerem Maß wie bei einer "tannenbaumartigen" Anordnung der Pumpstufen einer Cartridge-Vakuumpumpe (vgl. Fig. 1).

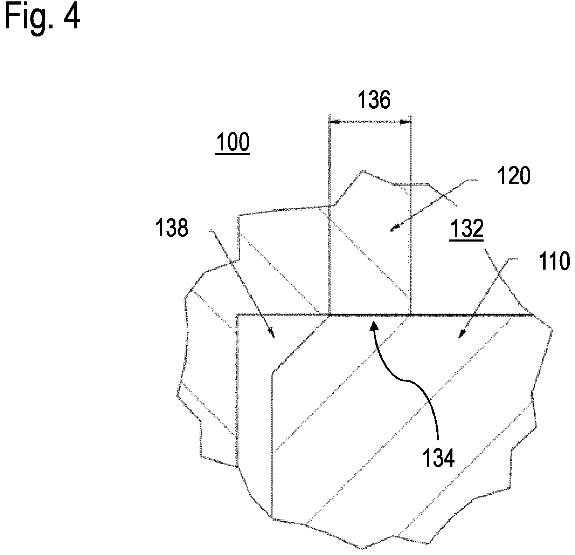

Fig. 4 zeigt eines weiteres Ausführungsform des Vakuumgeräts 100, die der Ausführungsform von Fig. 3 ähnlich ist. Bei der Ausführungsform von Fig. 4 verläuft der Dichtbereich 134 jedoch nahezu vollständig in radialer Richtung und bildet somit eine Stufe innerhalb der Innenwand 118 des Vakuumgeräts 100 an der Vakuumpumpe 110. Die Ausführungsform von Fig. 4 weist den Vorteil auf, dass aufgrund des nahezu radialen Verlaufs des Dichtbereichs 134 die Reibungskräfte in axialer Richtung, die beim Einfügen der Vakuumpumpe 110 in die Vakuumkammer 120 auftreten, nahezu vollständig unterdrückt sind. Der gestufte Verlauf des Spalts 130 über den Dichtbereich 134 hinweg führt jedoch zu einer noch stärkeren Vergrößerung des Durchmessers der Vakuumpumpe 110 von dem Bereich 132 mit dem Druckniveau p0 des Ports H0 über den Dichtbereich 134 bis zu dem Bereich 138 des Spalts 130 auf dem Druckniveau p1 des Ports H1. Für diese Ausführung ist zu bemerken, dass, entgegen der Vakuumpumpe mit axial und schräg erstreckenden Dichtflächen, die Vakuumpumpe (d.h. die Vakuumpumpe als eigenständige Einrichtung) mit radial erstreckenden Dichtflächen nicht Teil der Erfindung ist (vgl. Anspruch 12).

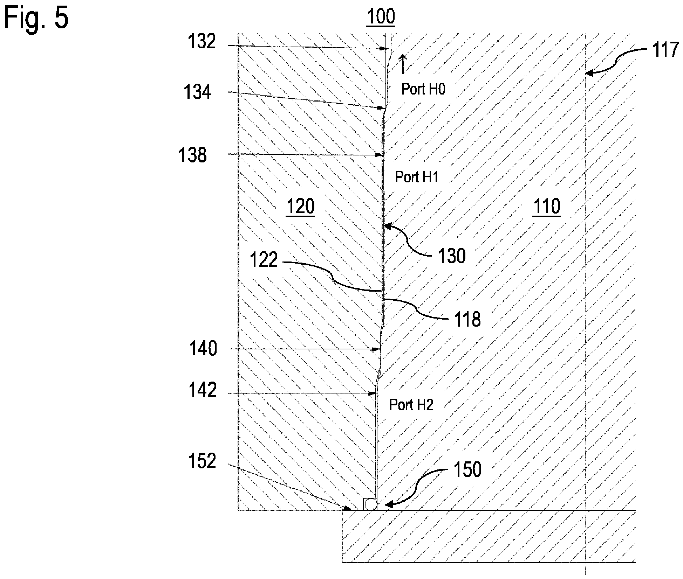

Fig. 5 zeigt eine weitere Ausführungsform des Vakuumgeräts 100, bei der ähnlich wie bei der in Fig. 2 gezeigten Ausführungsform ein jeweiliger Dichtbereich 134, 140 zwischen dem Druckniveau p0 des Ports H0 und dem Druckniveau p1 des Ports H1 bzw. zwischen dem Druckniveau p1 und dem Druckniveau p2 des Ports H2 vorgesehen ist. Der Dichtbereich 134 unterscheidet sich jedoch von dem in Fig. 2 dargestellten Dichtbereich einerseits dadurch, dass der Spalt 130 in diesem Dichtbereich schräg bzw. konisch verläuft, d.h. unter einem vorbestimmten Winkel größer als 0° und kleiner als 90° bezüglich der Längsachse 117 der Vakuumpumpe 110, wie dies auch in Fig.3 dargestellt ist. Darüber hinaus besteht in dem Dichtbereich 134 bei der in Fig. 5 gezeigten Ausführungsform ein metallischer Kontakt zwischen der Vakuumpumpe 110 und der Vakuumkammer 120.

Mit anderen Worten ist der Spalt 130 zwischen der Vakuumpumpe 110 und der Vakuumkammer 120 in dem Dichtbereich 134 bei der in Fig. 5 dargestellten Ausführungsform "auf Anschlag gedrückt", so dass die innere Wand 118 an der Vakuumpumpe 110 und die äußere Wand 122 an der Vakuumkammer 120 in direktem Kontakt stehen bzw. sich berühren. Die durch den Dichtbereich 134 gebildete Kontaktstelle zwischen der Vakuumpumpe 110 und der Vakuumkammer 120 kann als sogenannter Auflagerpunkt dienen, wenn die Vakuumpumpe 110 in die Vakuumkammer 120 eingefügt wird. Die Position der Kontaktstelle, die durch den Dichtbereich 134 gebildet ist, ist derart gewählt, dass das Schwingungsverhalten der Vakuumpumpe 110 während deren Betrieb verbessert wird.

Der metallische Kontakt zwischen der Vakuumpumpe 110 und der Vakuumkammer 120 in dem Dichtbereich 134 ist ferner vorteilhaft, wenn das Vakuumgerät 100 für den Ultrahochvakuumbereich vorgesehen ist. Aufgrund des metallischen Kontakts in dem Dichtbereich 134 ist das Ausgasverhalten des Vakuumgeräts 100 im Vergleich zu Anwendungen mit elastomerischen Dichtungen verbessert, da abgesehen von der elastomerischen Dichtung 150 zur Abdichtung gegenüber dem Atmosphärendruck keine nichtmetallischen Werkstoffe notwendig sind.

Ferner wird durch den metallischen Kontakt 134 die Wärmeübertragung zwischen der Vakuumkammer 120 und der Vakuumpumpe 110 verbessert. Dies ist für das Ausheizen des Vakuumgeräts 100 für einem Betrieb im Ultrahochvakuumbereich vorteilhaft.

Das Vakuumgerät 100 weist auch bei der in Fig. 5 dargestellten Ausführungsform an dem axialen Ende der Vakuumpumpe 110, das dem Port H0 in axialer Richtung gegenüberliegt, eine elastomerische Dichtung 150 auf, um den Port H2 und dem Bereich 142 des Spalts 130 in der Nähe des Ports H2 gegenüber Atmosphärendruck abzudichten. Zwischen der elastomerischen Dichtung 150 und dem Außenbereich des Vakuumgeräts 100 ist ferner ein weiterer Spalt 152 vorgesehen.

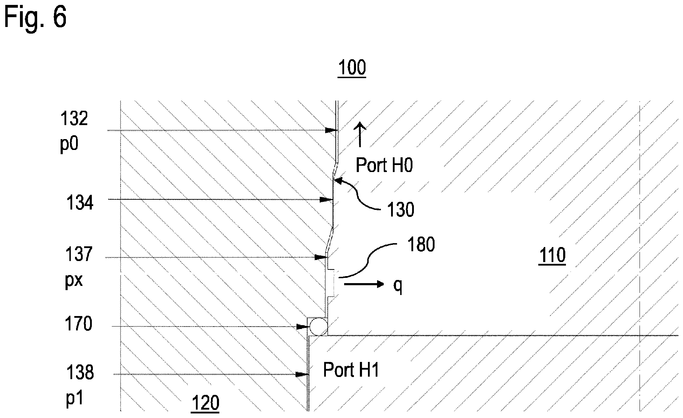

Fig. 6 zeigt eine weitere Ausführungsform des Vakuumgeräts 100, bei der zwischen dem Bereich 132 des Spalts 130, der das Druckniveau p0 des Ports H0 aufweist, und dem Bereich 138 des Spalts 130, der das Druckniveau p1 des Ports H1 aufweist, eine Zwischenabsaugung über einen zusätzlichen Port 180 vorgesehen ist. Im Einzelnen ist einerseits ein Dichtbereich 134 mit einer verengten bzw. verringerten Breite des Spalts 130 vorgesehen, um den Bereich 132 auf dem Druckniveau p0 gegenüber dem weiteren Bereich 138 auf dem Druckniveau p1 abzudichten, in denen der Spalt 130 im Vergleich zu dem Dichtbereich 134 eine größere Spaltbreite aufweist. Zusätzlich ist eine elastomerische Dichtung 170 zur Abdichtung zwischen den Druckniveaus p0 und p1 vorgesehen. In dem Bereich zwischen dem Dichtbereich 134 mit verringerter Breite des Spalts 130 und der elastomerischen Dichtung 170 befindet sich der zusätzliche Port 180 zur Zwischenabsaugung einer Gaslast q, die durch einen Pfeil veranschaulicht ist.

Aufgrund der Zwischenabsaugung über den zusätzlichen Port 180 weist der Spalt 130 in einem Bereich 137 zwischen dem Dichtbereich 134 und dem Bereich 138 auf dem Druckniveau p1 bzw. axial oberhalb bzw. stromaufwärts der elastomerischen Dichtung 170 einen Druck px auf, der geringer als das Druckniveau p1, aber größer als das Druckniveau p0 ist. Mit anderen Worten gilt p0 < px < p1.

Bei der in Fig. 6 gezeigten Ausführungsform des Vakuumgeräts 100 kann der Dichtbereich 134 eine Kontaktstelle bzw. einen metallischen Kontakt zwischen der Vakuumpumpe 110 und der Vakuumkammer 120 aufweisen. Alternativ kann jedoch auch ein metallischer Kontakt zwischen der Vakuumpumpe 110 und der Vakuumkammer 120 in dem Dichtbereich 134 verhindert werden. Dadurch kann das Vakuumgerät 100 bei der in Fig. 6 gezeigten Ausführungsform insgesamt ohne metallischen Kontakt in den Dichtbereichen 134, 140 bzw. in den dort gebildeten Spaltdichtungen ausgestattet sein. Ohne einen solchen metallischen Kontakt weist die Vakuumpumpe 110 gegenüber der Vakuumkammer 120 eine verbesserte Wärmeisolierung auf. Eine solche verbesserte Wärmeisolierung kann vorteilhaft sein, damit ein Wärmefluss einer Applikation innerhalb der Vakuumkammer 120 nicht auf die Vakuumpumpe 110 übertragen wird oder damit umgekehrt eine erwärmte Vakuumpumpe 110 keinen unnötigen Wärmefluss zu der Vakuumkammer 120 und zu einer Applikation erzeugt, die in dieser vorgesehen ist.

Ein metallischer Kontakt zwischen der Vakuumpumpe 110 und der Vakuumkammer 120 kann ferner auch im Bereich der elastomerischen Dichtung 150 und in dem an diese angrenzenden Spalt 152 verhindert werden (vgl. Fig. 5), indem eine Schraubverbindung zwischen der Vakuumpumpe 110 und der Vakuumkammer 120, die beispielsweise in dem Bereich des Spalts 152 angeordnet ist, als eine Schraubverbindung ohne metallischen Kontakt zur Vakuumpumpe 110 ausgebildet ist. Bei einer solchen Schraubverbindung ist zwar ein Schaft der jeweiligen Schraube metallisch mit der Vakuumkammer 120 verbunden, während jedoch ein Kopf der jeweiligen Schraube mittels eines Kunststoffteils gegenüber der Vakuumkammer 110 isoliert ist. Dadurch können die Vakuumkammer 120 und die Vakuumpumpe 110 elektrisch und thermisch voneinander isoliert werden, und es erfolgt ferner eine Abkopplung bezüglich Vibrationen zwischen diesen.

### Bezugszeichenliste

- 10: Split-Flow-Turbomolekularpumpe
- 20: Cartridge-Gehäuse
- 30, 32, 34: Einlassöffnung, Port H0, H1 bzw. H2
- 40, 42, 44: axial verpresste, elastomerische Dichtung, O-Ring
- 100: Vakuumgerät
- 110: Vakuumpumpe
- 112, 114, 116: Einlassöffnung, Port H0, H1 bzw. H2
- 117: Längsachse in axialer Richtung der Vakuumpumpe
- 118: innere Wand
- 120: Vakuumkammer
- 122: äußere Wand
- 130: Spalt
- 132: Bereich des Spalts auf Druckniveau p0
- 134: Dichtbereich
- 136: Länge des Dichtbereichs entlang des Spalts
- 137: Bereich des Spalts auf Druckniveau px
- 138: Bereich des Spalts auf Druckniveau p1
- 140: Dichtbereich
- 142: Bereich des Spalts auf Druckniveau p2
- 150: elastomerische Dichtung
- 152: Spalt zwischen elastomerischer Dichtung und Außenbereich
- 160: Position am Umfang der äußeren Wand
- 162: Spaltbreite
- 170: elastomerische Dichtung
- 180: zusätzlicher Port

## Patentansprüche

1. Vakuumgerät (100) umfassend:
eine Vakuumkammer (120) und eine Vakuumpumpe (110), die ausgebildet ist, um in die Vakuumkammer (120) eingefügt zu werden, und die eine innere Wand (118) aufweist, die ringförmig um eine Längsachse (117) der Vakuumpumpe (110) herum verläuft,
wobei die Vakuumkammer (120) eine äußere Wand (122) aufweist, welche zum Aufnehmen der inneren Wand (118) der Vakuumpumpe (110) ausgebildet ist und welche die innere Wand (118) derart umgibt, dass ein Spalt (130) zwischen der inneren Wand (118) und der äußeren Wand (122) gebildet ist,
wobei die innere Wand (118) zumindest einen umlaufenden Abschnitt umfasst, der eine solche Distanz bezüglich der Längsachse (117) aufweist, dass der Abschnitt mit der äußeren Wand (122) der Vakuumkammer (120) zumindest einen als Spaltdichtung wirkenden Dichtbereich (134) ohne weiteres Dichtelement bildet, in welchem ein Spalt (130) zwischen der inneren Wand (118) der Vakuumpumpe (110) und der äußeren Wand (122) der Vakuumkammer (120) eine Breite aufweist,
**dadurch gekennzeichnet, dass** die Breite geringer ist als eine Breite des Spalts (130) außerhalb des Dichtbereichs (134).

2. Vakuumgerät (100) nach Anspruch 1, wobei
mehrere Dichtbereiche (134, 140) entlang des Spalts (130) angeordnet sind.

3. Vakuumgerät (100) nach einem der Ansprüche 1 oder 2, wobei
sich der Dichtbereich (134) bezogen auf mindestens einen von zwei Bereichen (132, 138) des Spalts (130), zwischen denen der Dichtbereich (134) angeordnet ist, unter einem vorbestimmten Winkel erstreckt.

4. Vakuumgerät (100) nach Anspruch 3, wobei
sich der Dichtbereich (134) rechtwinklig zu mindestens einem der zwei Bereiche (132, 138) des Spalts (130) erstreckt, zwischen denen der Dichtbereich (134) angeordnet ist.

5. Vakuumgerät (100) nach Anspruch 3, wobei
sich der Dichtbereich (134) in die gleiche Richtung wie die zwei Bereiche (132, 138) des Spalts (130) erstreckt, zwischen denen der Dichtbereich (134) angeordnet ist.

6. Vakuumgerät (100) nach einem der Ansprüche 1 bis 5, wobei
eine zusätzliche Dichtung (150) zwischen dem Spalt (130) und einem Außenbereich der Vakuumpumpe (110), in dem Atmosphärendruck vorliegt, angeordnet ist.

7. Vakuumgerät (100) nach einem der Ansprüche 1 bis 6, wobei
in mindestens einem Dichtbereich (134, 140) ein metallischer Kontakt zwischen der Wand (118) der Vakuumpumpe (110) und der Wand (122) der Vakuumkammer (120) vorhanden ist.

8. Vakuumgerät (100) nach einem der Ansprüche 1 bis 6, wobei
die Wand (118) der Vakuumpumpe (110) und die Wand (122) der Vakuumkammer (120) frei von einem metallischen Kontakt sind.

9. Vakuumgerät (100) nach einem der Ansprüche 1 bis 8, wobei
ein Verhältnis einer Länge (136) des Dichtbereichs (134) entlang des Spalts (130) und des vorbestimmten Abstands zwischen der Wand (118) der Vakuumpumpe (110) und der Wand (122) der Vakuumkammer (120) innerhalb des Dichtbereichs (134) größer als 5 und bevorzugt größer als 10 ist.

10. Vakuumgerät (100) nach einem der Ansprüche 1 bis 9, wobei
der vorbestimmte Abstand zwischen der Wand (118) und der Wand (122) der Vakuumkammer (120) innerhalb des Dichtbereichs (134) nicht größer als 0,2 mm und bevorzugt nicht größer als 0,05 mm ist.

11. Vakuumgerät (100) nach einem der Ansprüche 1 bis 10, wobei
eine Länge (136) des Dichtbereichs (134) entlang des Spalts (130) größer als 5 mm und bevorzugt größer als 40 mm ist.

12. Vakuumpumpe (110), die ausgebildet ist, um in eine Vakuumkammer (120) eingefügt zu werden, und die eine Wand (118) aufweist, die ringförmig um eine Längsachse (117) der Vakuumpumpe (110) herum verläuft,
wobei die Wand (118) zumindest einen umlaufenden Abschnitt umfasst, der eine solche Distanz bezüglich der Längsachse (117) aufweist, dass der Abschnitt mit einer gegenüberliegenden Wand (122) der Vakuumkammer (120) zumindest einen als Spaltdichtung wirkenden Dichtbereich (134) ohne weiteres Dichtelement bildet, in welchem ein Spalt (130) zwischen der Wand (118) der Vakuumpumpe (110) und der gegenüberliegenden Wand (122) der Vakuumkammer (120) eine Breite aufweist,
und
wobei sich der Dichtbereich (134) in einer axialer Richtung erstreckt, die entlang der Längsachse (117) verläuft, oder wobei der Dichtbereich (134) bezogen auf weitere Bereiche (132, 138) des Spalts (130), zwischen denen der Dichtbereich (134) angeordnet ist, unter einem vorbestimmten Winkel in einer schrägen Richtung verläuft, so dass der Dichtbereich (134) eine konische Ringfläche bildet,
**dadurch gekennzeichnet, dass** die Breite geringer ist als eine Breite des Spalts (130) außerhalb des Dichtbereichs (134).

## Claims

1. A vacuum device (100) comprising:
a vacuum chamber (120) and a vacuum pump (110) which is configured to be inserted into the vacuum chamber (120) and which has an inner wall (118) that extends in a ring shape around a longitudinal axis (117) of the vacuum pump (110),
wherein the vacuum chamber (120) has an outer wall (122) which is configured to receive the inner wall (118) of the vacuum pump (110) and which surrounds the inner wall (118) such that a gap (130) is formed between the inner wall (118) and the outer wall (122),
wherein the inner wall (118) comprises at least one peripheral section which has such a distance with respect to the longitudinal axis (117) that the section, together with the outer wall (122) of the vacuum chamber (120), forms at least one sealing region (134) acting as a gap seal without a further sealing element, in which sealing region (134) a gap (130) between the inner wall (118) of the vacuum pump (110) and the outer wall (122) of the vacuum chamber (120) has a width,
**characterized in that** the width is less than a width of the gap (130) outside the sealing region (134).

2. A vacuum device (100) according to claim 1, wherein
a plurality of sealing regions (134, 140) are arranged along the gap (130).

3. A vacuum device (100) according to one of the claims 1 or 2, wherein
the sealing region (134) extends at a predetermined angle relative to at least one of two regions (132, 138) of the gap (130) between which the sealing region (134) is arranged.

4. A vacuum device (100) according to claim 3, wherein
the sealing region (134) extends at a right angle to at least one of the two regions (132, 138) of the gap (130) between which the sealing region (134) is arranged.

5. A vacuum device (100) according to claim 3, wherein
the sealing region (134) extends in the same direction as the two regions (132, 138) of the gap (130) between which the sealing region (134) is arranged.

6. A vacuum device (100) according to any one of the claims 1 to 5, wherein an additional seal (150) is arranged between the gap (130) and an outer region of the vacuum pump (110) in which atmospheric pressure is present.

7. A vacuum device (100) according to any one of the claims 1 to 6, wherein a metallic contact between the wall (118) of the vacuum pump (110) and the wall (122) of the vacuum chamber (120) is present in at least one sealing region (134, 140).

8. A vacuum device (100) according to any one of the claims 1 to 6, wherein the wall (118) of the vacuum pump (110) and the wall (122) of the vacuum chamber (120) are free of a metallic contact.

9. A vacuum device (100) according to any one of the claims 1 to 8, wherein a ratio of a length (136) of the sealing region (134) along the gap (130) and the predetermined distance between the wall (118) of the vacuum pump (110) and the wall (122) of the vacuum chamber (120) within the sealing region (134) is greater than 5 and preferably greater than 10.

10. A vacuum device (100) according to any one of the claims 1 to 9, wherein the predetermined distance between the wall (118) and the wall (122) of the vacuum chamber (120) within the sealing region (134) is not greater than 0.2 mm and preferably not greater than 0.05 mm.

11. A vacuum device (100) according to any one of the claims 1 to 10, wherein a length (136) of the sealing region (134) along the gap (130) is greater than 5 mm and preferably greater than 40 mm.

12. A vacuum pump (110) which is configured to be inserted into a vacuum chamber (120) and which has a wall (118) that extends in a ring shape around a longitudinal axis (117) of the vacuum pump (110),
wherein the wall (118) comprises at least one peripheral section which has such a distance with respect to the longitudinal axis (117) that the section, together with an oppositely disposed wall (122) of the vacuum chamber (120), forms at least one sealing region (134) acting as a gap seal without a further sealing element, in which sealing region (134) a gap (130) between the wall (118) of the vacuum pump (110) and the oppositely disposed wall (122) of the vacuum chamber (120) has a width, and
wherein the sealing region (134) extends in an axial direction which extends along the longitudinal axis (117), or wherein the sealing region (134) extends at a predetermined angle in an oblique direction relative to further regions (132, 138) of the gap (130) between which the sealing region (134) is arranged so that the sealing region (134) forms a conical annular surface,
**characterized in that** the width is less than a width of the gap (130) outside the sealing region (134).

## Revendications

1. Appareil à vide (100), comprenant :
une chambre à vide (120) et une pompe à vide (110) conçue pour être insérée dans la chambre à vide (120) et comprenant une paroi intérieure (118) qui s'étend en forme d'anneau autour d'un axe longitudinal (117) de la pompe à vide (110),
la chambre à vide (120) comprenant une paroi extérieure (122) conçue pour recevoir la paroi intérieure (118) de la pompe à vide (110) et entourant la paroi intérieure (118) de telle sorte qu'un intervalle (130) se forme entre la paroi intérieure (118) et la paroi extérieure (122),
la paroi intérieure (118) comprenant au moins une portion circonférentielle dont la distance par rapport à l'axe longitudinal (117) est telle que ladite portion forme, conjointement avec la paroi extérieure (122) de la chambre à vide (120), au moins une zone d'étanchéité (134) agissant comme un joint d'étanchéité d'intervalle, sans autre élément d'étanchéité, zone dans laquelle un intervalle (130) entre la paroi intérieure (118) de la pompe à vide (110) et la paroi extérieure (122) de la chambre à vide (120) présente une certaine largeur,
**caractérisé en ce que** ladite largeur est inférieure à une largeur de l'intervalle (130) à l'extérieur de la zone d'étanchéité (134).

2. Appareil à vide (100) selon la revendication 1,
dans lequel plusieurs zones d'étanchéité (134, 140) sont disposées le long de l'intervalle (130).

3. Appareil à vide (100) selon l'une des revendications 1 ou 2,
dans lequel la zone d'étanchéité (134) s'étend selon un angle prédéterminé par rapport à l'une au moins de deux zones (132, 138) de l'intervalle (130) entre lesquelles est disposée la zone d'étanchéité (134).

4. Appareil à vide (100) selon la revendication 3,
dans lequel la zone d'étanchéité (134) s'étend à angle droit par rapport à l'une au moins des deux zones (132, 138) de l'intervalle (130) entre lesquelles est disposée la zone d'étanchéité (134).

5. Appareil à vide (100) selon la revendication 3,
dans lequel la zone d'étanchéité (134) s'étend dans la même direction que les deux zones (132, 138) de l'intervalle (130) entre lesquelles est disposée la zone d'étanchéité (134).

6. Appareil à vide (100) selon l'une des revendications 1 à 5,
dans lequel un joint d'étanchéité supplémentaire (150) est disposé entre l'intervalle (130) et une zone extérieure de la pompe à vide (110) où règne la pression atmosphérique.

7. Appareil à vide (100) selon l'une des revendications 1 à 6,
dans lequel, dans au moins une zone d'étanchéité (134, 140), un contact métallique est présent entre la paroi (118) de la pompe à vide (110) et la paroi (122) de la chambre à vide (120).

8. Appareil à vide (100) selon l'une des revendications 1 à 6,
dans lequel la paroi (118) de la pompe à vide (110) et la paroi (122) de la chambre à vide (120) sont exemptes de contact métallique.

9. Appareil à vide (100) selon l'une des revendications 1 à 8,
dans lequel le rapport entre la longueur (136) de la zone d'étanchéité (134) le long de l'intervalle (130) et la distance prédéterminée entre la paroi (118) de la pompe à vide (110) et la paroi (122) de la chambre à vide (120) à l'intérieur de la zone d'étanchéité (134) est supérieur à 5, et de préférence supérieur à 10.

10. Appareil à vide (100) selon l'une des revendications 1 à 9,
dans lequel la distance prédéterminée entre la paroi (118) et la paroi (122) de la chambre à vide (120) à l'intérieur de la zone d'étanchéité (134) n'est pas supérieure à 0,2 mm, et de préférence n'est pas supérieure à 0,05 mm.

11. Appareil à vide (100) selon l'une des revendications 1 à 10,
dans lequel la longueur (136) de la zone d'étanchéité (134) le long de l'intervalle (130) est supérieure à 5 mm et de préférence supérieure à 40 mm.

12. Pompe à vide (110) conçue pour être insérée dans une chambre à vide (120) et comprenant une paroi (118) qui s'étend en forme d'anneau autour d'un axe longitudinal (117) de la pompe à vide (110),
la paroi (118) comprenant au moins une portion circonférentielle dont la distance par rapport à l'axe longitudinal (117) est telle que ladite portion forme, conjointement avec une paroi opposée (122) de la chambre à vide (120), au moins une zone d'étanchéité (134) agissant comme un joint d'étanchéité d'intervalle, sans autre élément d'étanchéité, zone dans laquelle un intervalle (130) entre la paroi (118) de la pompe à vide (110) et la paroi opposée (122) de la chambre à vide (120) présente une certaine largeur, et
la zone d'étanchéité (134) s'étendant dans une direction axiale qui s'étend le long de l'axe longitudinal (117), ou la zone d'étanchéité (134) s'étendant selon un angle prédéterminé dans une direction oblique par rapport à d'autres zones (132, 138) de l'intervalle (130) entre lesquelles est disposée la zone d'étanchéité (134), de sorte que la zone d'étanchéité (134) forme une surface annulaire conique,
**caractérisée en ce que** ladite largeur est inférieure à une largeur de l'intervalle (130) à l'extérieur de la zone d'étanchéité (134).
